# EUROPÄISCHE PATENTSCHRIFT

(11) **EP 3 362 241 B1**
(45) Veröffentlichungstag und Bekanntmachung des Hinweises auf die Patenterteilung: **20.11.2024**
(21) Anmeldenummer: 16788455.0
(22) Anmeldetag: 11.10.2016
(51) Int. Cl.: B29C 33/42, B29C 45/37

(54) **TOPOLOGISCH STRUKTURIERTE BAUTEILPLATTE, VERFAHREN ZU DEREN HERSTELLUNG, HERSTELLUNG EINER KORRESPONDIERENDEN SPRITZGUSSFORM UND VERWENDUNG**
TOPOLOGICALLY STRUCTURED COMPONENT PANEL, METHOD FOR PRODUCING THE SAME, METHOD FOR PRODUCING A CORRESPONDING INJECTION MOLDING FORM AND USE
PLAQUE À COMPOSANTS STRUCTURÉE DE MANIÈRE TOPOLOGIQUE, PROCÉDÉ POUR SA FABRICATION, PROCÉDÉ DE FABRICATION D'UN MOULE D'INJECTION CORRESPONDANT ET UTILISATION

(30) Priorität: 12.10.2015 EP 15189263
(43) Veröffentlichungstag der Anmeldung: 22.08.2018
(73) Patentinhaber: Adval Tech Holding AG, 3172 Niederwangen (CH)
(72) Erfinder: GÖBEL, Markus, 6280 Hochdorf (CH)
(74) Vertreter: Bremi, Tobias Hans
(86) Internationale Anmeldenummer: PCT/EP2016/074300
(87) Internationale Veröffentlichungsnummer: WO 2017/064040

(56) Entgegenhaltungen:
- EP-A1- 0 569 192
- JP-A- 2010 023 326
- US-A1- 2010 035 078
- US-A1- 2010 233 428

## Beschreibung

### TECHNISCHES GEBIET

Die vorliegende Erfindung betrifft ein Kunststoff-Bauteil mit wenigstens einem in einer Ebene liegenden Bauteilabschnitt, welcher Abschnitt ein regelmässiges zweidimensionales Rippenmuster mit Auslenkungen aus der genannten Ebene (topologische Strukturierung) aufweist Des weiteren betrifft die Erfindung Verfahren zu Herstellung derartiger Bauteile und Verwendungen derartiger Bauteile, v.a. als Strukturbauteile im Fahrzeugbereich, z.B. Luftleitelemente im Motor von Automobilen.

### STAND DER TECHNIK

Die Herstellung von Bauteilen die beispielsweise Gehäusen, Abdeckungen, Leitelementen etc. aus thermoplastischem Kunststoff beispielsweise im Spritzgussverfahren ist lange bekannt. Insbesondere im Automobilbereich ersetzen derartige Kunststoff-Bauteile zunehmend Metall-Bauteile, einerseits wegen der inzwischen hervorragenden mechanischen Eigenschaften, auch bei hohen Temperaturen oder niedrigen Temperaturen, die durch moderne thermoplastische Kunststoffe, sei es nun Polyolefin oder Polyamid zum Beispiel, zur Verfügung gestellt werden, und andererseits aber auch wegen des wesentlich geringeren Gewichts der Kunststoff-Bauteile verglichen mit Metall.

Je nach Anwendung müssen derartige Bauteile unterschiedlichen Belastungen bei unterschiedlichen Temperaturen standhalten, sie müssen vor allem zum Beispiel im Automobilbereich gute Biegemomente und eine hohe Schlagzähigkeit aufweisen, und zwar konstant über grosse Temperaturbereiche. Herstellungstechnisch ist es inzwischen zwar anforderungsreich aber möglich, derartige Bauteile in flexiblen Produktionsprozessen auch aus unterschiedlichen Materialien sukzessive aufzubauen, so können harte Bereiche beispielsweise auf Basis von Polyolefin in einem 1. Schritt in der Form ausgebildet werden, die Form kann dann erweitert werden, und anschliessend in einem 2. Schritt ein weicher Bereich ausgebildet werden, beispielsweise auf Basis von thermoplastischen Elastomeren. Eine Herausforderung ist es dabei immer, bei möglichst geringem Gewicht, sprich bei geringer Wandstärke, und damit niedrigen Kosten ein möglichst hochwertiges Bauteil zur Verfügung zu stellen, sprich mit guten mechanischen Eigenschaften auch unter unterschiedlichsten Temperatur- und Feuchtigkeitsbedingungen.

US-A-2010233428 offenbart einen Gegenstand mit einer geprägten Dichtung umfassend mindestens zwei Stege und eine geprägte Dichtung, die einen Teil der mindestens zwei Stege verbindet, wobei die Dichtung co-registrierte konzentrisch getrennte erweiterte Elemente umfasst, die in den mindestens zwei Stegen ausgebildet sind, wobei die diskreten ausgedehnten Elemente offen sind an den proximalen Enden.

JP2010023326 stellt einen Kunstharz-Plattenkörper bereit, der eine ausreichende Steifigkeit sicherstellen kann, ohne die Plattendicke zu erhöhen. Die aerodynamische Abdeckung wird durch ein Kunstharz-Spritzgussverfahren hergestellt, das ein geschmolzenes Kunstharz in einen Hohlraum einspritzt, der aus einer beweglichen Matrize und einer festen Matrize besteht, wobei viele Vorsprünge in einer Ausrichtung ausgebildet sind, so dass planare Abschnitte dazwischen liegen. Die Vorsprünge sind nicht in einer geraden Linie, während die Vorsprünge in der Draufsicht eine runde Form und im Querschnitt einen Kreisbogen bilden. Ferner wird das Verhältnis von Projektionshöhe H zu Projektionsbreite W1 als besonders geeignet angesehen, wenn es im Bereich von etwa 16,3% liegt.

### DARSTELLUNG DER ERFINDUNG

Es ist entsprechend unter anderem Aufgabe der vorliegenden Erfindung, eine Verbesserung für derartige Bauteile zur Verfügung zu stellen, d.h. Bauteile aus Kunststoff, die gute mechanische Eigenschaften aufweisen (vor allem Steifigkeit und Biegefestigkeit) und dennoch möglichst leicht sind und sich einfach herstellen lassen.

Gegenstand der vorliegenden Erfindung ist damit unter anderem ein Bauteil gemäss Anspruch 1 respektive der zugeordneten abhängigen Ansprüche, ein Verfahren zur Herstellung eines derartigen Bauteils gemäss Anspruch 12. Des Weiteren betrifft die vorliegende Erfindung aber auch ein Verfahren zur Auslegung einer Spritzgussform oder Thermo-Umformform nach Anspruch 13 zur Herstellung eines derartigen Bauteils respektive zur Verwendung in einem solchen Herstellungsverfahren, sowie Verwendungen von derartigen Bauteilen.

Entsprechend betrifft die vorliegende Erfindung unter anderem ein Bauteil mit wenigstens einem Kunststoff-Bereich, der mit seiner einer Vorderseite zugewandten Oberfläche entlang einer Referenzebene verläuft, und topologisch strukturiert ist. Der Kunststoff-Bereich dadurch gekennzeichnet, dass in diesem Kunststoff-Bereich die Kunststoffwand eine Wandstärke d im Bereich von 0.2-5 mm, vorzugsweise im Bereich von 0.5-3 mm oder 0.7-0.9 mm aufweist. Weiterhin ist nun in diesem Kunststoff-Bereich ein zusammenhängendes zweidimensionales Gitter von rinnenförmigen Vertiefungen ausgebildet, bei welchen Vertiefungen die Kunststoffwand dieses Bereichs bei im wesentlichen gleichbleibender Wandstärke d aus der Referenzebene heraus um einen Versatz v versetzt ist. Dieser Versatz v ist senkrecht zur Referenzebene und von der Referenzebene zur Oberfläche der Rückseite bei den Vertiefungen zu verstehen und liegt im Bereich eines 1.5 bis 3.5-fachen der Wandstärke d liegt, vorzugsweise im Bereich eines 2.5 bis 3.5-fachen der Wandstärke. Das Gitter bildet dabei ein Muster mit einer Vielzahl von sich in zwei Richtungen der Referenzebene wiederholenden Gitterzellen.

Im Rahmen dieser Erfindung ist unter einer rinnenförmigen Vertiefung eine von einer Vorderseite aus betrachtet ausgebildete Zone zu verstehen, welche bezüglich einer Referenzebene vertieft ausgebildet ist, und welche auf der Rückseite eine korrespondierende Rippe bildet. Eine solche rinnenförmige Vertiefung ist also nicht einfach eine rinnenförmige Ausnehmung in der einen Oberfläche, welche die Rückseite nicht beeinflusst, sondern bildet auf der Rückseite eine entsprechende Rippe aus, was daran liegt, dass die Materialstärke über die rinnenförmige Vertiefung hin im Wesentlichen konstant bleibt.

Unter der Wandstärke d der Kunststoffschicht im topologisch strukturierten Bereich ist die Dicke gemessen senkrecht zur Oberflächenebene an der entsprechenden Stelle zu verstehen. Da die Materialdicke über die topologische Struktur hinweg im wesentlichen konstant ist sind in der Regel auch die Oberfläche auf der Vorderseite und auf der Rückseite parallel verlaufend.

Die genannte Referenzebene ist die Ebene, die durch die höchsten Punkte der Erhebungen auf der Vorderseite aufgespannt wird. Die Referenzebene ist eine plane Ebene, kann aber auch unter Umständen leicht gekrümmt sein.

Der genannte Versatz v ist der Abstand vom am weitesten zur Rückseite ausgelenkten Punkt der Oberfläche im Bereich der Vertiefungen zur Referenzebene. Tatsächlich spannen die am weitesten zur Rückseite aus gelenkten Punkte auf der Oberfläche der Rückseite eine Ebene auf, die im wesentlichen parallel zur Referenzebene liegt. Diese Ebene hat einen Abstand v zur Referenzebene.

Ein Gitter im vorstehenden Sinne ist ein geometrisches Gitter im Sinne vorzugsweise einer lückenlosen und überlappungsfreien Partition eines Bereichs der Ebene durch eine Menge von Gitterzellen. Die Gitterzellen werden definiert durch eine Menge von Gitterpunkten, die untereinander durch eine Menge von Gitterlinien verbunden sind, und die Gitterelemente bilden.

Diese topologisch strukturierte Oberfläche lässt sich einerseits einfach herstellen, führt zu verbesserten mechanischen Werten, insbesondere Biegemomente, führt zu einer verbesserten Strömung von Luft an der Oberfläche, zu einer ansprechenden Optik und Haptik und weiteren Vorteilen.

Gemäss einer ersten bevorzugten Ausführungsform ist ein derartiges Bauteil dadurch gekennzeichnet, dass die Gitterzellen ausgewählt sind aus der Gruppe der Polygone, namentlich: Dreiecke, vorzugsweise gleichschenklige Dreiecke; Vierecke, vorzugsweise Quadrate, Rechtecke, Rhomben, Rauten; Fünfecke, vorzugsweise gleichseitige Fünfecke; Sechsecke, vorzugsweise gleichseitige Sechsecke; Achtecke, vorzugsweise gleichseitige Achtecke; oder eine Kombination dieser Elemente.

Gemäss einer weiteren bevorzugten Ausführungsform verfügen die Gitterzellen über eine wenigstens zweizählige Rotationssymmetrie. Vorzugsweise verfügen sie über eine 2, 3, 4, 5, 6, oder 8-zählige Rotationssymmetrie, insbesondere vorzugsweise eine 6-zählige Rotationssymmetrie.

Bevorzugter Massen gibt es für den Aufbau des Gitters nur eine einzige Gitterzelle, die identisch über das gesamte Gitter ausgebildet ist. So ist beispielsweise bevorzugter Massen die Gitterzeile ein regelmässiges Sechseck, was zur Ausbildung einer Wabenstruktur als Gitter führt.

Die Seitenlänge der Gitterzelle liegt bevorzugter Massen im Bereich von 2- 40 mm, vorzugsweise im Bereich von 3 - 30 mm, insbesondere im Bereich von 7 - 15 mm. Bevorzugter Massen ist die Gitterzelle gleichseitig ausgebildet.

Die Gitterzelle ist insbesondere bevorzugter Massen ein gleichseitiges Sechseck, vorzugsweise mit einer Sechseck-Schlüsselweite k (Abstand der parallelen Seiten) im Bereich von 15 - 25 mm. Dies gilt insbesondere vorzugsweise bei einer Kunststoff-Wandstärke d im Bereich von 0.7 - 1 mm.

Die Wandstärke d des topologisch strukturierten Bereichs liegt erfindungsgemäss im Bereich von 0.7 - 1.1 mm, vorzugsweise im Bereich von 0.7 - 1 mm.

Gemäss einer weiteren bevorzugten Ausführungsform ist die Wandstärke d im ganzen Kunststoff-Bereich bis auf eine Abweichung von weniger als 5%, vorzugsweise von weniger als 2 %, gleich ist über die Welligkeit.

Die Vertiefungen sind bevorzugter Massen in Bezug auf ihre von der Vorderseite betrachtete konkave Ausbildung abgerundet ausgebildet, vorzugsweise mit Krümmungsradien im Bereich von 2-10 mm, insbesondere vorzugsweise im Bereich von 3-7 mm.

Gemäss einer weiteren bevorzugten Ausführungsform sind die Vertiefungen in Bezug auf die durch Ecken der Gitterzelle gebildeten Abwinklungen abgerundet ausgebildet, vorzugsweise mit einem Radius im Bereich von 4-10 mm, insbesondere im Bereich von 5-7 mm.

Die zwischen den Vertiefungen gebildeten Erhebungsbereiche sind vorzugsweise von der Vorderseite betrachtet konvex gekrümmt ausgebildet, wobei vorzugsweise der am meisten zur Vorderseite ragende Mittelpunkt im Bereich des Symmetriezentrums der Gitterzelle oder auf diesem angeordnet ist.

Wenigstens der Kunststoff-Bereich besteht bevorzugter Massen aus einem thermoplastischen Kunststoff ausgewählt aus der folgenden Gruppe: Polyolefin, Polyamid, Polycarbonat, Polyester, Polylactat, Polyacrylat, Polystyrol, Polyvinyl, Polyäther, oder eine Mischung oder ein Copolymer dieser Systeme.

Infrage kommen beispielsweise Systeme ausgewählt aus der folgenden Gruppe Acrylnitril-Butadien-Styrol (ABS), Polyamid 6, Polymethylmethacrylat (PMMA), Polyethylenterephthalat (PET), Polyethylen (PE), Polypropylen (PP), Polyetheretherketon (PEEK), Polyvinylchlorid (PVC), oder Mischungen oder Copolymere dieser Systeme. Insbesondere bevorzugt ist der Kunststoff-Bereich auf Basis von Polypropylen (PP) ausgebildet, wobei dieser einen wesentlichen Anteil an Füllstoff, insbesondere Talkum in einem Anteil von 20-30 Gewichtsprozent, aufweisen kann.

Die oben genannten Kunststoffe können wie erwähnt Füllstoffe und/oder Verstärkungsstoffe enthalten, vorzugsweise in einem Anteil von bis zu 60 Gewichtsprozent, vorzugsweise von bis zu 40 Gewichtsprozent, bezogen auf die gesamte Formmasse. Diese Füllstoffe und/oder Verstärkungsstoffe können vorzugsweise ausgewählt sein aus der Gruppe von Verstärkungsfasern, insbesondere Glasfasern, Kohlefasern, partikuläre, insbesondere mineralische Füllstoffe, insbesondere Talkum, Kreide, Glaskugeln, Glasbruch, Kalziumcarbonat, und Mischungen davon.

Weiterhin vorzugsweise können diese Kunststoffe Additive und/oder Zuschlagstoffe verschieden von den genannten Füllstoffen und/oder Verstärkungsstoffen in einem Anteil von bis zu 20 Gewichtsprozent, vorzugsweise von bis zu 10 Gewichtsprozent enthalten, insbesondere vorzugsweise ausgewählt aus der Gruppe von Schlagzähmodifikator, organische oder anorganische Pigmente, Russ, Entformungshilfsmittel, Stabilisatoren, Rückstände aus dem Polymerisationsprozess wie insbesondere Katalysatoren, oder Mischungen davon.

Des weiteren betrifft die vorliegende Erfindung ein derartiges Bauteil, welches dadurch gekennzeichnet ist, dass das Bauteil neben dem Kunststoffbereich wenigstens einen weiteren Bereich ohne topologische Strukturierung aufweist, wobei es sich vorzugsweise um einen Randbereich des Bauteils handelt. Dieser Randbereich kann aus dem gleichen Material bestehen und keine topologische Struktur aufweisen. Anstelle von oder zusätzlich zu einem solchen Randbereich aus dem gleichen Material kann dieser weitere Bereich bevorzugter Massen aus einem anderen Kunststoffmaterial gefertigt ist, insbesondere bevorzugt aus einem bei Raumtemperatur elastomeren Material, insbesondere bevorzugt aus einem thermoplastischen Elastomermaterial (TPE). Ein solches Material kann beispielsweise ausgewählt aus der folgenden Gruppe sein: thermoplastische Elastomere auf Olefinbasis, insbesondere PP/EPDM, vernetzte thermoplastische Elastomere auf Olefinbasis, insbesondere auf Basis von PP/EPDM, thermoplastische Elastomere auf Urethanbasis, thermoplastische Polyesterelastomere, thermoplastische Copolyester, Styrol-Blockcopolymere , insbesondere SBS, SEBS, SEPS, SEEPS und MBS, thermoplastische Copolyamide. Ein derartiger weiterer Bereich kann direkt an den topologisch strukturierten Kunststoffbereich angespritzt oder aber auch angeklebt sein.

Der weitere Bereich kann vorzugsweise aus einem TPE-Material bestehen, und wenigstens einen Randbereich des Bauteils ausbilden. Bevorzugt ist z.B. eine Kombination von PP-T20 (Polypropylen mit 20% Talkum) mit einem SEBS TPE Material für die Weichbereiche Weiterhin vorzugsweise kann das Bauteil zusätzlich ein oder mehrere Befestigungselemente aufweisen, mittels welcher das Bauteil an einem anderen Werkstück befestigt werden kann, insbesondere vorzugsweise an einem Fahrzeugelement. Bei dem genannten Bauteil kann es sich um einen Teil oder als ganzes um ein Bauteil ausgewählt aus der folgenden Gruppe handeln: Gehäuse, Abdeckung, Verschalung, Leitelement, insbesondere im Automobilbereich, Mobilfunkbereich, Elektronikbereich, Elektrikbereich, Eisenbahnbereich, Sportartikelbereich, Möbelbereich handelt. Insbesondere bevorzugter Massen handelt es sich um ein Luftleitteil und/oder eine Luftführung im Automobilbereich handelt.

Weiterhin betrifft die vorliegende Erfindung ein Verfahren, insbesondere ein Verfahren zur Herstellung eines Bauteils wie oben dargestellt. Dieses Verfahren ist dadurch gekennzeichnet, dass in einem ersten Schritt aus einem thermoplastischen Material in einem Spritzgussverfahren oder Extrusionsverfahren eine (oder mehrere) Hartkomponente des Bauteils ausgebildet wird, wobei direkt in diesem Verfahrensschritt wenigstens ein Bereich oder die gesamte Hartkomponente durch entsprechende Formgebung der Form (Kavität) topologisch strukturiert wird. Weiterhin vorzugsweise können dann noch weitere Bereiche, vorzugsweise aus einem anderen Kunststoffmaterial, insbesondere vorzugsweise aus einem thermoplastischen Elastomermaterial, angespritzt werden.

Weiterhin betrifft die vorliegende Erfindung ein Verfahren zur Auslegung einer Spritzgussform vorzugsweise zur Verwendung in einem Verfahren wie oben dargestellt, und beispielsweise zur Herstellung eines Bauteils, wie es oben vorgestellt wurde. Dieses Verfahren ist dadurch gekennzeichnet, dass ausgehend von Basiselementen , deren Kopfbereiche die Gitterelemente vorgeben, und die als konische polygonale Kegelstümpfe ausgebildet sind mit Konus-Seitenflächen, die über abgerundete Krümmungskanten miteinander verbunden sind, diese Basiselemente dem Gitter entsprechend angeordnet werden, vorzugsweise, bezogen auf ein Wabengeometrie-Basiselement, das dem Gitterelement ähnlich ist, und in der Ebene des Übergangs vom Kopfbereich zu den Seitenflächen gebildet ist, beispielsweise in einem Abstand im Bereich von 3-10 mm, vorzugsweise im Bereich von 4-6 mm, und indem die Basiselemente mit einem Übergangsradius zur Ausbildung der Geometrie der Vertiefungen verbunden werden, vorzugsweise mit einem Radius im Bereich von 3-10 mm, vorzugsweise im Bereich von 4-6 mm, und indem die so gebildete topologisch strukturierte Begrenzungsfläche zur Ausbildung der Kavität der Form dupliziert und um die gewünschte Wandstärke senkrecht zur Ebene versetzt wird.

Weiterhin betrifft die vorliegende Erfindung die Verwendung eines Bauteils, wie es oben vorgestellt wurde, als Gehäuse, Abdeckung, Verschalung, Leitelement, insbesondere im Automobilbereich, Mobilfunkbereich, Elektronikbereich, Elektrikbereich, Eisenbahnbereich, Sportartikelbereich, Möbelbereich handelt, insbesondere vorzugsweise als Luftleitteil und/oder eine Luftführung im Automobilbereich.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: Ansichten eines Luftleitelements für den Automobilbereich, wobei in a) eine Aufsicht, in b) ein Schnitt und in c) eine perspektivische Darstellung gegeben werden;
- Fig. 2: Ansichten eines Luftleitelements mit Wabenstrukturierung, wobei in a) eine perspektivische Darstellung von unten und in b) eine perspektivische Darstellung von oben gegeben sind;
- Fig. 3: die Definition und die Hauptabmessungen des Basiselements, wobei in a) eine Aufsicht, in b) und c) eine erste und zweite Seitenansicht und in d) eine perspektivische Darstellung gegeben sind;
- Fig. 4: eine Darstellung der Bauteilauslegung gegeben ist, wobei in a) ein Ausschnitt in Aufsicht und in b) in perspektivische Darstellung jeweils mit den Basiselementen nach dem Quadrat in c) gegeben ist;
- Fig. 5: Detaildarstellungen einer Referenzplatte mit strukturierter Ebene, wobei in a) die Platte in Aufsicht, in b) ein Schnitt entlang der Linie A-A in a) dargestellt ist, in c) der Schnitt von b) im Endbereich mit Vergrösserung, in d) der Schnitt entlang der Linie B-B in a) dargestellt ist, und in e) der Schnitt von d) im Endbereich mit Vergrösserung;
- Fig. 6: die Messanordnung (unten) für eine plane Platte (oben) und eine Platte mit Strukturierung (Mitte);
- Fig. 7: Ergebnisse der Bauteilverformungsbestimmungen; und
- Fig. 8: Ergebnisse der Bauteilspannungsbestimmungen.

### BESCHREIBUNG BEVORZUGTER AUSFÜHRUNGSFORMEN

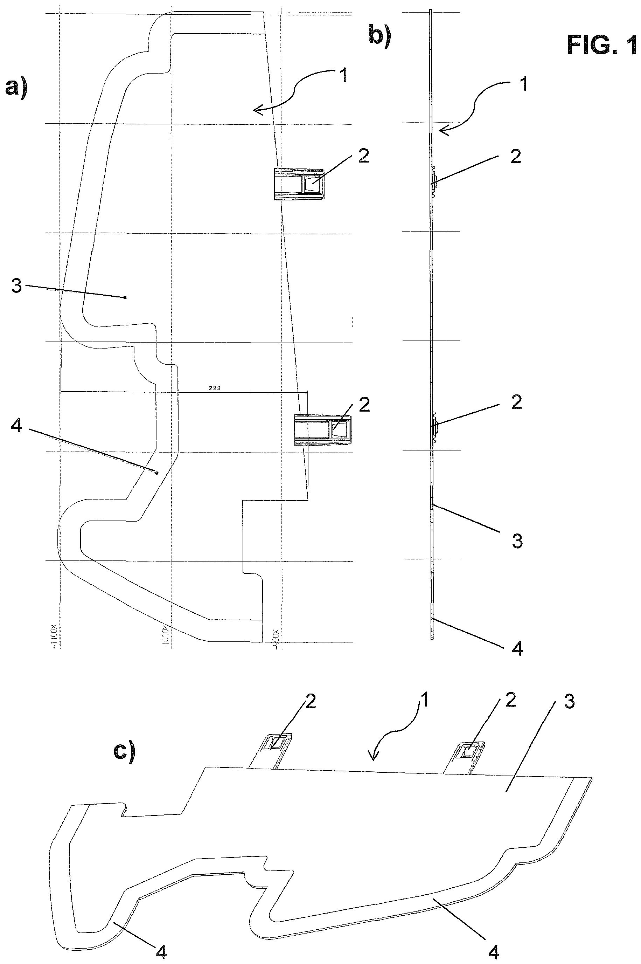

Als Beispiel eines solchen Bauteils 1 ist in Figur 1 ein Kunststoff-Luftleitelement für den Automobilbereich dargestellt. Es handelt sich um eine Platte in einer Ebene (vgl. Fig. 1b), und das Kunststoff-Bauteil umfasst eine Hartkomponente 3, welche an der einen Kante über einen Rand 4 verfügt, der mit einem anderen Bauteil in Anlage kommt. Der Rand 4 besteht aus einer Weichkomponente z.B. aus einem thermoplastischen Elastomermaterial. Im vorliegenden Fall wurde als Material für die Hartkomponente PP-T20 eingesetzt, und als Material für die Weichkomponente TPE-S, konkret ein SEBS-Material.

Auf der diesem bei Raumtemperatur elastischem Rand 4 gegenüberliegenden Seite sind Befestigungselemente 2, hier Klippverbindungen für eine schnelle Montage an einem anderen Bereich der Trägerstruktur vorgesehen.

Derartige Luftleitelemente werden im Rahmen der Fahrzeugmontage in den Motorraum eingesetzt, indem sie über die Befestigungselemente 2 angeklippt werden, über einen gegebenenfalls weiteren flexiblen Bereich zwischen 2 verschiedenen Hartkomponenten in die richtige Position gebracht werden, und grenzen nachher mit dem elastischen Bereich 4 an andere Bauteile in diesem Motorenraum.

Ein solches Luftleitelement leitet, wie der Name sagt, die Luft im Motorraum, es kann sich dabei um Kühlluft, aber auch um einen anderen Luftstrom handeln.

Solche Luftleit-Elemente müssen mechanisch genügend stabil sein, auch bei unterschiedlichen Temperaturen, zum Teil auch sehr hohen Temperaturen, sie sollen aber auf der anderen Seite so leicht wie möglich sein, um das Gesamtgewicht des Fahrzeugs niedrig zu halten und damit auch dessen Energieverbrauch.

Das in Figur 1 dargestellte Luftleit-Element ist als einzige Kunststoffebene für den Hartbereich 3 ausgebildet.

Um den Anforderungen hinsichtlich mechanischer und thermischer Belastung bei derartigen Anwendungen gerecht zu werden müssen solche Elemente im Bereich der Hartkomponenten eine Materialstärke von wenigstens einem Millimeter aufweisen. Auch dann müssen sie meist durch lineare parallele Verstärkungsrippen entlang der Hauptbelastungsrichtungen verstärkt werden.

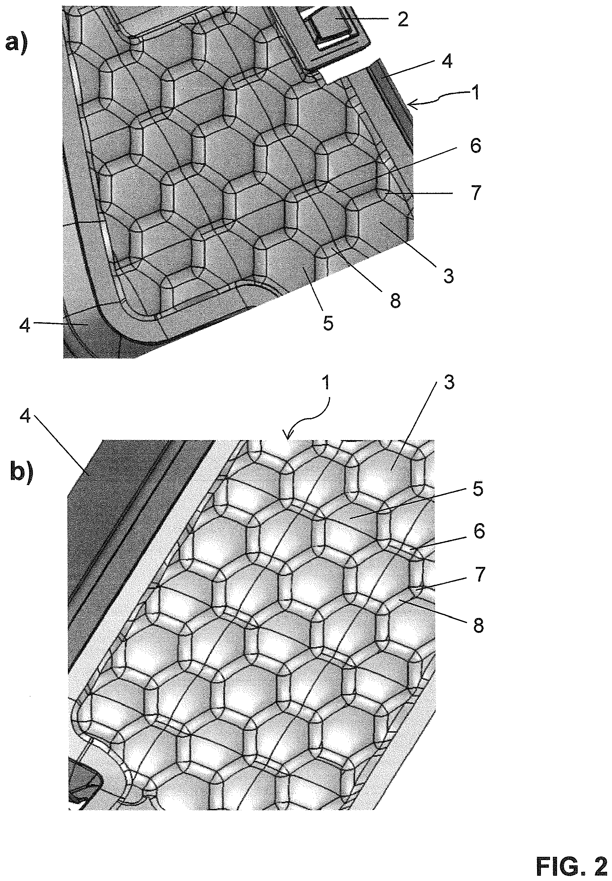

Gemäss der vorliegenden Erfindung wird nun die Hartkomponente 3 entweder als Ganzes oder nur in den entscheidenden Bereichen (beispielsweise strukturiert mit Ausnahme eines umlaufenden flachen Randes, wie in Figur 2 dargestellt), durch eine topologische Strukturierung versteift. Diese Strukturierung ist von der Rückseite betrachtet in Figur 2a dargestellt, und von der Vorderseite in Figur 2b. Die topologische Strukturierung, auf Basis von sechseckigen Basiselementen, ist als ein Gitter 30 von Vertiefungen 6 ausgebildet, welche jeweils einen Erhebungsbereich 5 umlaufend begrenzen. Die Vertiefungen 6 bilden ein geometrisches Gitter 30 und verfügen über gerade Seitenabschnitte 8 und diese verbindende Kreuzungsbereiche 7. Die Wandstärke (senkrecht zur Ebene des Bauteils) ist über die Topologie im Wesentlichen identisch, das heisst die Begrenzungsfläche auf der Vorderseite und jene auf der Rückseite sind im Wesentlichen identisch, sie sind einfach um die Wandstärke d senkrecht zu einer Referenzebene des Bauteils verschoben.

Diese topologische Strukturierung erlaubt es, die Wandstärke eines derartigen Bauteils 1 wesentlich zu reduzieren, wodurch Gewicht und Kosten gespart werden können. Gleichzeitig ergibt sich der gegenüber den üblichen Verstärkungsrippen erhebliche Vorteil, dass die Versteifungswirkung eines derartigen regelmässigen zweidimensionalen Gitters eine Erhöhung des Biegemoment im Wesentlichen homogen in allen Raumrichtungen bereitstellt, und nicht wie bei den üblichen linearen Rippen, wo nur das Biegemoment in einer Richtung senkrecht zur Rippe erhöht wird. Insbesondere bei dem hier beschriebenen Bauteil ist es wichtig, da bei unterschiedlichen Belastungen und Temperaturen auch unterschiedliche Biegemomente in verschiedenen Richtungen auftreten können, die so optimal abgefangen werden können.

Zudem ergibt sich durch die topologische Strukturierung der Oberfläche auch noch der Vorteil, dass die Strömungsverhältnisse an der Oberfläche verbessert werden. Es ergibt sich weiter eine angenehme Haptik und Optik.

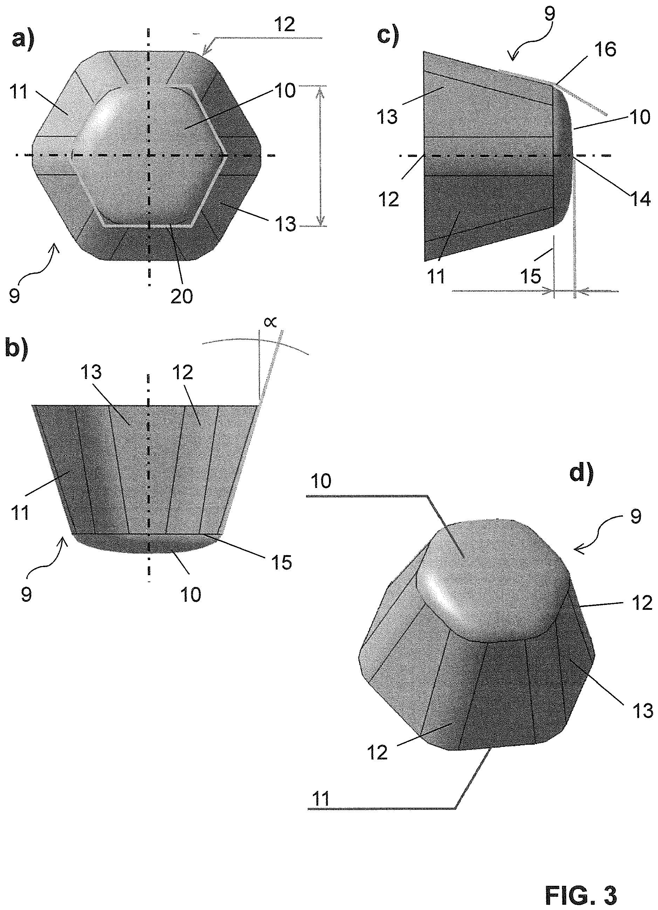

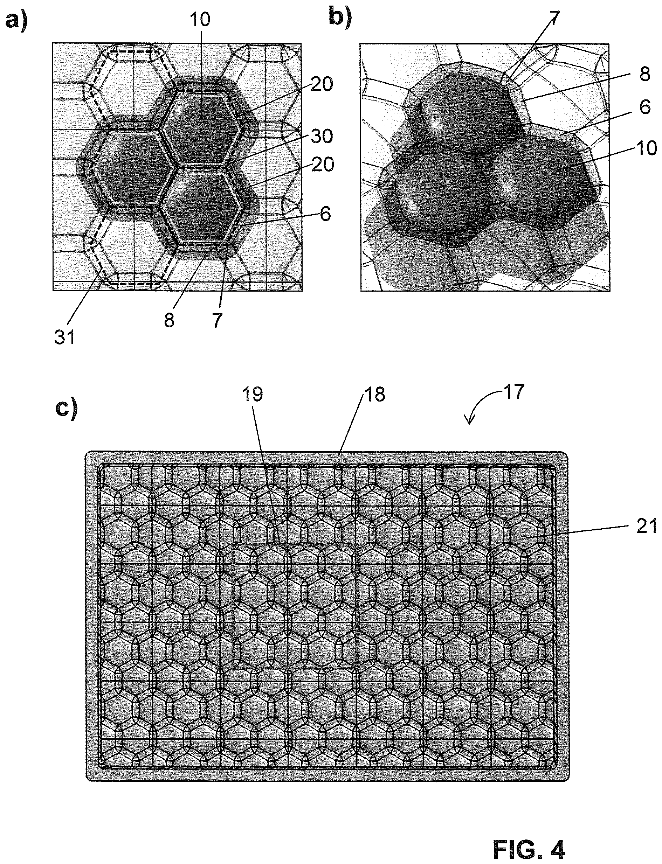

Um eine solche Form auch tatsächlich für den Herstellungsprozess auslegen zu können, ohne dass dabei die Datenmengen für die Form uferlos werden, und der Designprozess hochkompliziert, kann ein Verfahren verwendet werden, wie es anhand der Figuren 3 und 4 beschrieben werden soll.

Ausgegangen wird bei diesem Aufbau der topologischen Wabenstruktur des topologisch strukturierten Bereichs der Fläche des Bauteils von einer Vielzahl von identischen Basiselementen 9. Diese Basiselemente 9 sind als konische Kegelstümpfe ausgebildet, welche in der Konusabschlussebene 15 ein Wabengeometrie-Basiselement 20 in Form eines Sechsecks 20 vorgeben. Dieses gleichseitige Sechseck 20, beispielsweise mit einer Schlüsselweite K von 21 mm, wird vorgegeben, und in einem folgenden Schritt werden die Ecken dieses gleichseitigen Sechsecks 20 mit einem Radius gerundet, beispielsweise mit einem Radius von 6 Millimeter. Die Seitenfläche des Konus 11, die den umlaufenden Mantel bildet, wird bezüglich Hauptachse des Kegelstumpfs um den Winkel α geneigt, α liegt beispielsweise bei 15 Grad. Bei der Konus-Seitenfläche 11 werden plane Abschnitte 13 miteinander über Krümmungskanten 12 verbunden, die beispielsweise mit einem Krümmungsradius von 6 mm ausgebildet werden können. Die individuellen planen Abschnitte 13 der gesamten Konus-Seitenfläche 11 werden also über die Krümmungskantenflächenelemente 12 miteinander verbunden.

Die Deckfläche 10 wird mit einem tangentialen Übergang 16 zur Konus-Seitenfläche 11 ausgebildet, und wird ebenfalls zur Oberseite hin konvex gerundet ausgebildet. Zum Mittelpunkt 14 dieser Deckfläche 10 gibt es relativ zur Konus-Abschlussebene 15 eine Überhöhung, beispielsweise von 3.5 mm. Diese virtuellen Basis-Elemente 9 dienen nun zur Festlegung der Topologie der Begrenzungsfläche für die Spritzgussform, und stellen die Basis für das zu erzeugende Gitter.

In Figur 4 ist nun dargestellt, wie aus diesen Basiselementen 9 die eigentliche Fläche aufgebaut wird. Die Basiselemente 9 werden dem Wabenmuster entsprechend nebeneinander angeordnet, wobei das Sechseck 20 jeweils in einem Abstand von 5 mm zum benachbarten Sechseck angeordnet wird. Anschliessend wird zwischen benachbarte Basiselemente respektive zwischen den benachbarten gerundeten Sechsecken der benachbarten Basiselemente eine konvexe gerundete Ebene mit einem Radius von beispielsweise 5 mm gelegt. So werden die jeweils um die Erhöhungen umlaufenden Vertiefungen ausgebildet.

Das so gebildete Gitter 30 aus den Gitterzellen 31 greift also das Wabengeometrie Element 20 des Basiselements 9 auf, verfügt aber über eine grössere Gitterkonstante, vorgegeben ist diese Vergrösserung durch den Abstand zwischen den Basiselementen 9.

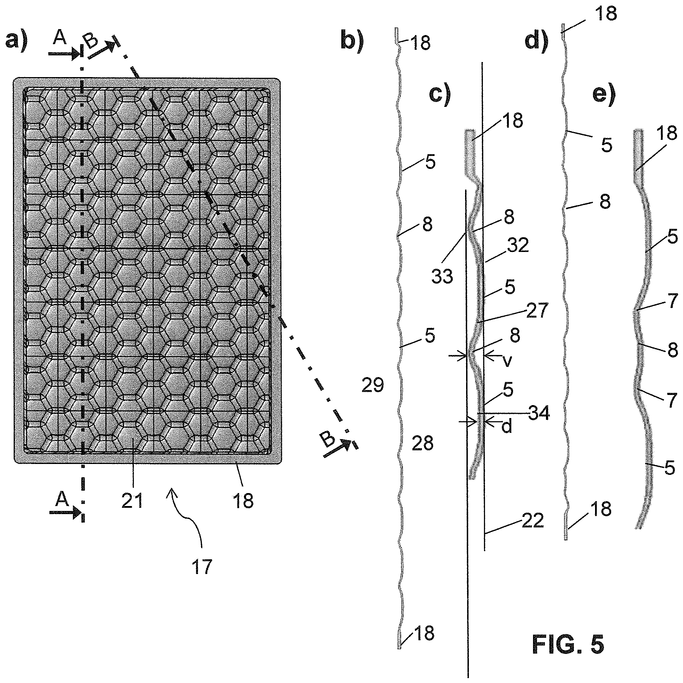

Die so definierte Begrenzungsebene kann nun dupliziert werden und um die gewünschte Materialstärke des resultierenden Bauteils senkrecht zur Referenzebene der Fläche versetzt werden. Die beiden so erzeugten Begrenzungsebenen definieren die Kavität des Werkzeugs und können aufgrund der vorgegebenen Abrundungen auch herstellungstechnisch ohne Weiteres erzeugt werden und erzeugen auch Spritzgusstechnisch hinsichtlich Abformung und Ablösung von der Form keine Probleme. In Figur 5 ist nun eine unter Verwendung einer derartigen Topologie hergestellte Referenzplatte mit Wabenstruktur dargestellt. Die Referenzplatte weist dabei einen umlaufenden Rand 18 auf, die Dicke im Randbereich ist 1.5 mm, im topologisch strukturierten Bereich 21 hingegen nur 0.8 mm.

Aus den Schnittdarstellungen gemäss b)-e) ist erkennbar, wie diese topologisch strukturierte Fläche auf der Vorderseite 28 die genannten Erhebungen 5 aufweist. Die Oberfläche 32 dieser Vorderseite 28 definiert jeweils Mittelpunkte 34 der Erhebungsbereiche, diese Mittelpunkte stellen die maximale Auslenkung zur Vorderseite 28 hin dar, und definieren eine Referenzebene 22. Die Referenzebene 22 wird entsprechend durch diese Mittelpunkte 34 aufgespannt.

Die Vertiefungen 6 auf der anderen Seite, so beispielsweise wie in Figur 5c dargestellt der Seitenabschnitt 8, bilden auf der Rückseite 29 der strukturierten Platte mit der dortigen Oberfläche 33 ebenfalls Punkte maximaler Auslenkung, namentlich die tiefsten Punkte 35 der rückseitigen Oberfläche 33 als Versatz v ist der Abstand dieser tiefsten Punkte 35 der rückseitigen Oberfläche zur Referenzebene 22 zu verstehen.

Erkennbar ist in dieser Figur auch, wie die Materialstärke im topologisch strukturierten Bereich, mit dem Bezugszeichen d angegeben, über den gesamten topologisch strukturierten Bereich im wesentlichen gleich ist, und beim Ausführungsbeispiel eben 0.8 mm beträgt. Im Randbereich 18 hingegen ist die Dicke grösser, und beträgt die genannten 1.5 mm. Man erhält also eine in zwei Dimensionen strukturiert gewellte Oberfläche, die die genannten Vorteile hinsichtlich Bauteilspannung und Biegemomente respektive Bauteilverformungskennwerte, und Oberflächeneigenschaften bereitstellen kann.

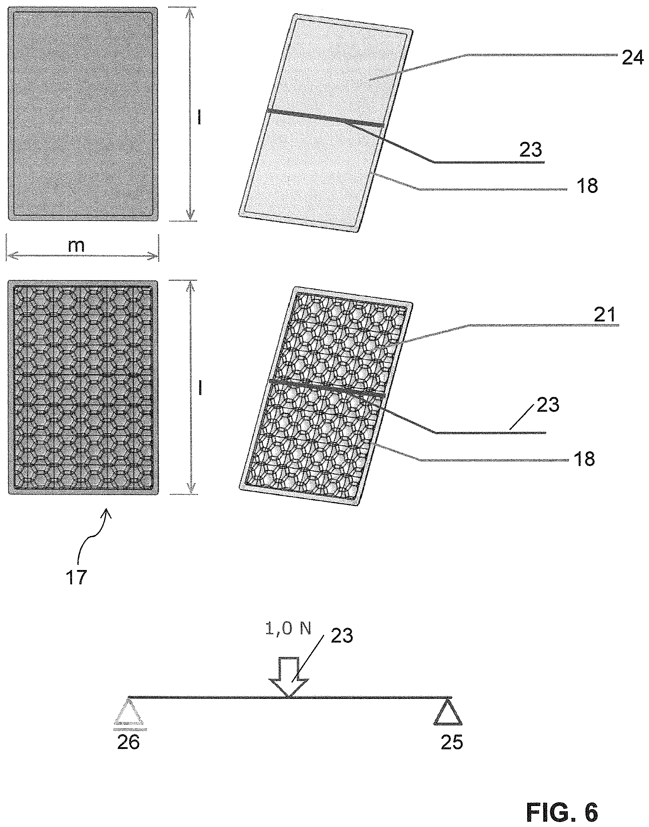

Um die Vorteile zu dokumentieren sind in den Figuren 6 - 8 die entsprechenden Berechnungen dargestellt. Untersucht wurden, anhand von finiten Elementberechnungen (FEM) Referenzplatten gleicher Dimensionierung, das heisst mit einer Länge 1 von 300 mm und einer Breite m von 200 mm, jeweils mit einem umlaufenden Rand 18 einer Materialstärke von 1.5 Millimeter und einer Breite von 0.8 Millimeter. Als Material wurde Polypropylen-T20 vorgegeben, das heisst ein Polypropylen mit 20 Gewichtsprozent Talkum als Füllstoff. Die Materialstärke im Bereich innerhalb des Rahmens wurde als 0.8 mm vorgegeben. Verglichen wurde einerseits eine Referenzplatte (in Figur 6 oben dargestellt), bei welcher der im Rahmen liegende Bereich mit Wandstärke 0.8 mm nicht strukturiert war, das heisst eine einfache Fläche bildete.

Diese Referenzplatte wurde verglichen mit der in Figur 6 unterhalb dargestellten Platte mit Wabenstruktur, in welcher der strukturierte Bereich 21 wie vorgängig beschrieben topologisch strukturiert war, und ebenfalls eine Materialstärke von 0.8 mm aufwies.

Nun wurde in beiden Fällen eine Linienlast 23 angelegt, wie dies in den beiden Referenzplattendarstellungen durch die zentrale Querlinie dargestellt ist, und es wurde eine Linienlast von 1 Newton gegenüber einem Festlager 25 und einem Loslager 26 angelegt (vergleiche Figur 6 unten).

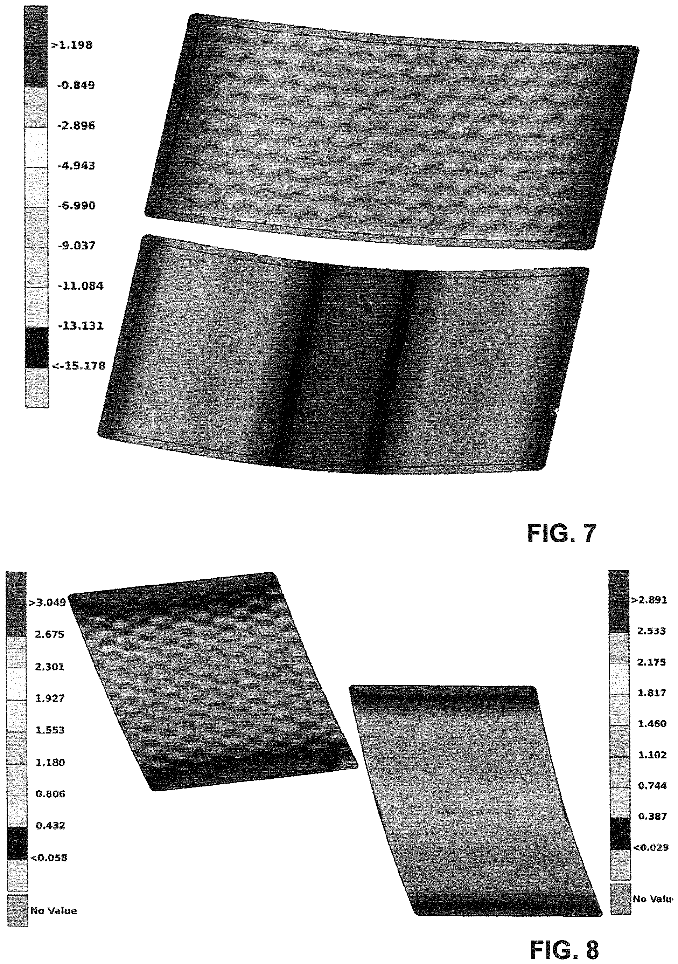

In Figur 7 ist die dabei resultierende Bauteilverformung dargestellt, oben die Bauteilverformung im Fall der Platte mit der Wabenstruktur und unter die Bauteilverformung bei der ebenen Platte. Im Fall der unten dargestellten planen Referenzplatte resultiert eine Deformation von mehr als 15 mm, während bei der oben dargestellten Wabenstruktur die Deformation im tiefstliegenden Bereich, das heisst entlang der Linie mit der Linienlast, im Bereich von 7 mm liegt. Die Deformation kann also durch die Wabenstruktur mehr als halbiert werden, und zwar gilt diese Versteifung in alle Richtungen in der Ebene der Platte im Wesentlichen gleich, das heisst sie ist im Wesentlichen homogen im Gegensatz zu den üblichen Versteifungen mit Rippen oder ähnlichem.

Figur 8 zeigt die Resultate für die Bauteilspannung, hier liegt bei der links dargestellten Wabenstruktur die maximale Bauteilspannung im Bereich von 1.5, während sie bei der flachen Referenzplatte bei 2.5 liegt.

Es zeigt sich also, dass die Wabenstruktur eine erhebliche Verbesserung der mechanischen Werte gewährleisten kann, welche die leichte gewichstzunahme durch das etwas erhöhre Volumen von ca 4% bei weitem wett macht.

### BEZUGSZEICHENLISTE

| | | | |
|---|---|---|---|
| 1 | Luftleitplatte | 24 | nicht strukturierter Bereich |
| 2 | Befestigungselement | 25 | Fest-Lager |
| 3 | Hartkomponente | 26 | Los-Lager |
| 4 | Weichkomponente | 27 | Kunststoffwand |
| 5 | Erhebungsbereich | 28 | Vorderseite |
| 6 | umlaufende Vertiefung | 29 | Rückseite |
| 7 | Kreuzungsbereich | 30 | Gitter |
| 8 | Seitenabschnitt | 31 | Gitterzelle |
| 9 | Basiselement | 32 | Oberfläche Vorderseite |
| 10 | Deckfläche | 33 | Oberfläche Rückseite |
| 11 | Konus-S eitenfläche | 34 | Mittelpunkt Erhebungsbereich |
| 12 | Krümmungskante von 11 mit Radius 6 mm | | |
| | | 35 | tiefster Punkt Oberfläche |
| 13 | planer Abschnitt von 11 | | Rückseite bei 6 |
| 14 | Mittelpunkt Deckfläche | | |
| 15 | Konus-Abschlussebene | d | Kunststoff- Wandstärke |
| 16 | Übergang Deckfläche zur Konus-Seitenfläche | h | Höhe Mittelpunkt über Ebene 15 |
| | | | |
| 17 | Referenzplatte mit Wabenstruktur | k | Sechseck-Schlüsselweite, 21 mm |
| | | | |
| 18 | Randbereich von 17 | 1 | Länge der Referenzplatte, 300 mm |
| 19 | Ausschnitt | | |
| 20 | Wabengeometrie-Basiselement | m | Breite der Referenzplatte |
| | | v | Versatz |
| 21 | strukturierter Bereich von 17 | α | Seitenneigung der Konus-Seitenfläche, 15° |
| 22 | Referenzebene | | |
| 23 | Linienlast | | |

## Patentansprüche

1. Bauteil (1) mit wenigstens einem Kunststoff-Bereich (3,21), der mit seiner einer Vorderseite (28) zugewandten Oberfläche (32) entlang einer Referenzebene (22) verläuft,
**dadurch gekennzeichnet, dass**
in diesem Kunststoff-Bereich (3,21) die Kunststoffwand (27) eine Wandstärke (d) im Bereich von 0.7-1.1 mm aufweist,
in diesem Kunststoff-Bereich (3,21) ein zusammenhängendes zweidimensionales Gitter (30) von rinnenförmigen Vertiefungen (6) ausgebildet ist, bei welchen Vertiefungen (6) die Kunststoffwand (27) bei im wesentlichen gleichbleibender Wandstärke (d) aus der Referenzebene (22) heraus um einen Versatz (v) versetzt ist,
der Versatz (v) senkrecht zur Referenzebene (22) von der Referenzebene (22) zur Oberfläche (32) der Rückseite (29) bei den Vertiefungen (6) im Bereich eines 1.5 bis 3.5-fachen der Wandstärke (d) liegt,
wobei das Gitter (30) ein Muster mit einer Vielzahl von sich in zwei Richtungen der Referenzebene (22) wiederholenden Gitterzellen (31) bildet.

2. Bauteil (1) nach Anspruch 1, **dadurch gekennzeichnet, dass** die Gitterzellen (31) ausgewählt sind aus der Gruppe: Dreiecke, vorzugsweise gleichschenklige Dreiecke; Vierecke, vorzugsweise Quadrate, Rechtecke, Rhomben, Rauten; Fünfecke, vorzugsweise gleichseitige Fünfecke; Sechsecke, vorzugsweise gleichseitige Sechsecke; Achtecke, vorzugsweise gleichseitige Achtecke; oder eine Kombination dieser Elemente,
wobei vorzugsweise die Gitterzellen (31) eine wenigstens zweizählige Rotationssymmetrie aufweisen, vorzugsweise eine 2, 3, 4, 5, 6, oder 8-zählige Rotationssymmetrie, insbesondere vorzugsweise eine 6-zählige Rotationssymmetrie,
und wobei vorzugsweise alle Gitterzellen (31) im wesentlichen identisch sind.

3. Bauteil (1) nach einem der vorhergehenden Ansprüche, **dadurch gekennzeichnet, dass** die Seitenlänge der Gitterzelle (31) im Bereich von 2- 40 mm liegt, vorzugsweise im Bereich von 3 - 30 mm, insbesondere im Bereich von 7 - 15 mm, wobei vorzugsweise die Gitterzelle (31) gleichseitig ausgebildet ist.

4. Bauteil (1) nach einem der vorhergehenden Ansprüche, **dadurch gekennzeichnet, dass** die Gitterzelle (31) ein gleichseitiges Sechseck ist, vorzugsweise mit einer Sechseck-Schlüsselweite (k) im Bereich von 15 - 25 mm, vorzugsweise bei einer Kunststoff-Wandstärke (d) im Bereich von 0.5 - 1.1 mm, vorzugsweise im Bereich von 0.7 - 1 mm.

5. Bauteil (1) nach einem der vorhergehenden Ansprüche, **dadurch gekennzeichnet, dass** die Wandstärke (d) im Bereich von 0.7 - 1 mm liegt,
und/oder dass die Wandstärke (d) im ganzen Kunststoff-Bereich bis auf eine Abweichung von weniger als 5%, vorzugsweise von weniger als 2 %, gleich ist über die Welligkeit.

6. Bauteil (1) nach einem der vorhergehenden Ansprüche, **dadurch gekennzeichnet, dass** die Vertiefungen (6) in Bezug auf ihre von der Vorderseite (28) betrachtete konkave Ausbildung abgerundet ausgebildet sind, vorzugsweise mit Krümmungsradien im Bereich von 2-10 mm, insbesondere vorzugsweise im Bereich von 3-7 mm
und/oder dass die Vertiefungen (6) in Bezug auf die durch Ecken der Gitterzelle (31) gebildeten Abwinklungen abgerundet ausgebildet sind, vorzugsweise mit einem Radius im Bereich von 4-10 mm, insbesondere im Bereich von 5-7 mm.

7. Bauteil (1) nach einem der vorhergehenden Ansprüche, **dadurch gekennzeichnet, dass** die zwischen den Vertiefungen (6) gebildeten Erhebungsbereiche (5) von der Vorderseite (28) betrachtet konvex gekrümmt ausgebildet sind, wobei vorzugsweise der am meisten zur Vorderseite (28) ragende Mittelpunkt (34) im Bereich des Symmetriezentrums der Gitterzelle (31) oder auf diesem angeordnet ist.

8. Bauteil (1) nach einem der vorhergehenden Ansprüche, **dadurch gekennzeichnet, dass** wenigstens der Kunststoff-Bereich (2, 21) aus einem thermoplastischen Kunststoff ausgewählt aus der folgenden Gruppe besteht: Polyolefin, Polyamid, Polycarbonat, Polyester, Polylactat, Polyacrylat, Polystyrol, Polyvinyl, Polyäther, oder eine Mischung oder ein Copolymer dieser Systeme, insbesondere bevorzugt ausgewählt aus der folgenden Gruppe Acrylnitril-Butadien-Styrol (ABS), Polyamid 6, Polymethylmethacrylat (PMMA), Polyethylenterephthalat (PET), Polyethylen (PE), Polypropylen (PP), Polyetheretherketon (PEEK), Polyvinylchlorid (PVC), oder Mischungen oder Copolymere dieser Systeme, wobei insbesondere bevorzugt der Kunststoff-Bereich (2, 21) auf Basis von Polypropylen (PP) ausgebildet ist, wobei diese Kunststoffe vorzugsweise Füllstoffe und/oder Verstärkungsstoffe in einem Anteil von bis zu 60 Gewichtsprozent, vorzugsweise von bis zu 40 Gewichtsprozent, bezogen auf die gesamte Formmasse, enthalten, insbesondere vorzugsweise ausgewählt aus der Gruppe von Verstärkungsfasern, insbesondere Glasfasern, Kohlefasern, partikuläre, insbesondere mineralische Füllstoffe, insbesondere Talkum, Kreide, Glaskugeln, Glasbruch, Kalziumcarbonat, und Mischungen davon,
und wobei weiterhin vorzugsweise diese Kunststoffe Additive und/oder Zuschlagstoffe verschieden von den genannten Füllstoffen und/oder Verstärkungsstoffen in einem Anteil von bis zu 20 Gewichtsprozent, vorzugsweise von bis zu 10 Gewichtsprozent enthalten, insbesondere vorzugsweise ausgewählt aus der Gruppe von Schlagzähmodifikator, organische oder anorganische Pigmente, Russ, Entformungshilfsmittel, Stabilisatoren, Rückstände aus dem Polymerisationsprozess wie insbesondere Katalysatoren, oder Mischungen davon.

9. Bauteil (1) nach einem der vorhergehenden Ansprüche, **dadurch gekennzeichnet, dass** das Bauteil (1) neben dem Kunststoffbereich (2, 21) wenigstens einen weiteren Bereich (4) ohne topologische Strukturierung aufweist, wobei es sich vorzugsweise um einen Randbereich des Bauteils (1) handelt, und wobei dieser weitere Bereich (4) bevorzugter Massen aus einem anderen Kunststoffmaterial gefertigt ist, insbesondere bevorzugt aus einem bei Raumtemperatur elastomeren Material, insbesondere bevorzugt aus einem thermoplastischen Elastomermaterial (TPE), insbesondere bevorzugt ausgewählt aus der folgenden Gruppe: thermoplastische Elastomere auf Olefinbasis, insbesondere PP/EPDM, vernetzte thermoplastische Elastomere auf Olefinbasis, insbesondere PP/EPDM, thermoplastische Elastomere auf Urethanbasis, thermoplastische Polyesterelastomere, thermoplastische Copolyester, Styrol-Blockcopolymere, insbesondere SBS, SEBS, SEPS, SEEPS und MBS, thermoplastische Copolyamide
wobei vorzugsweise der weitere Bereich (4) direkt an den topologisch strukturierten Kunststoffbereich (2, 21) angespritzt ist.

10. Bauteil (1) nach Anspruch 9, **dadurch gekennzeichnet, dass** der weitere Bereich (4) aus einem TPE-Material besteht, und wenigstens einen Randbereich (4) des Bauteils (1) ausbildet, wobei vorzugsweise das Bauteil (1) zusätzlich Befestigungselemente (2) aufweist, mittels welcher das Bauteil (1) an einem anderen Werkstück befestigt werden kann, insbesondere vorzugsweise an einem Fahrzeugelement.

11. Bauteil (1) nach einem der vorhergehenden Ansprüche, **dadurch gekennzeichnet, dass** es sich um einen Teil oder als Ganzes um ein Bauteil ausgewählt aus der folgenden Gruppe handelt: Gehäuse, Abdeckung, Verschalung, Leitelement, insbesondere im Automobilbereich, Mobilfunkbereich, Elektronikbereich, Elektrikbereich, Eisenbahnbereich, Sportartikelbereich, Möbelbereich handelt, wobei es sich insbesondere vorzugsweise um ein Luftleitteil und/oder eine Luftführung im Automobilbereich handelt.

12. Verfahren zur Herstellung eines Bauteils (1) nach einem der vorhergehenden Ansprüche, wobei in einem 1. Schritt aus einem thermoplastischen Material in einem Spritzgussverfahren oder Extrusionsverfahren eine Hartkomponente (3) des Bauteils ausgebildet wird, wobei direkt in diesem Verfahrensschritt wenigstens ein Bereich (2, 21) oder die gesamte Hartkomponente (3) durch entsprechende Formgebung der Form topologisch strukturiert wird, indem ein zusammenhängendes zweidimensionales Gitter (30) von rinnenförmigen Vertiefungen (6) ausgebildet wird, bei welchen Vertiefungen (6) die Kunststoffwand (27) bei im wesentlichen gleichbleibender Wandstärke (d) aus der Referenzebene (22) heraus um einen Versatz (v) versetzt ist, der Versatz (v) senkrecht zur Referenzebene (22) von der Referenzebene (22) zur Oberfläche (32) der Rückseite (29) bei den Vertiefungen (6) im Bereich eines 1.5 bis 3.5-fachen der Wandstärke (d) liegt, und wobei das Gitter (30) ein Muster mit einer Vielzahl von sich in zwei Richtungen der Referenzebene (22) wiederholenden Gitterzellen (31) bildet, und wobei weiterhin vorzugsweise anschliessend weitere Bereiche, vorzugsweise aus einem anderen Kunststoffmaterial, insbesondere vorzugsweise aus einem thermoplastischen Elastomermaterial, angespritzt werden.

13. Verfahren zur Auslegung einer Spritzgussform zur Herstellung eines Bauteils nach einem der vorhergehenden Ansprüche 1-10 zur Verwendung in einem Verfahren nach Anspruch 12, **dadurch gekennzeichnet, dass** ausgehend von Basiselementen (9), deren Kopfbereiche (10) die Gitterelemente (31) vorgeben, und die als konische polygonale Kegelstümpfe ausgebildet sind mit Konus-Seitenflächen (11) die über abgerundete Krümmungskanten (12) miteinander verbunden sind, diese Basiselemente (9) dem Gitter (30) entsprechend angeordnet werden, vorzugsweise, bezogen auf ein Wabengeometrie-Basiselement (20) das dem Gitterelement (31) ähnlich ist, und in der Ebene des Übergangs vom Kopfbereich (10) zu den Seitenflächen (11, 12) gebildet ist, in einem Abstand im Bereich von 3-10 mm, vorzugsweise im Bereich von 4-6 mm, und indem die Basiselemente mit einem Übergangsradius zur Ausbildung der Geometrie der Vertiefungen (6) verbunden werden, vorzugsweise mit einem Radius im Bereich von 3-10 mm, vorzugsweise im Bereich von 4-6 mm, und in dem die so gebildete topologisch strukturierte Begrenzungsfläche zur Ausbildung der Kavität der Form dupliziert und um die gewünschte Wandstärke senkrecht zur Ebene versetzt wird.

14. Verwendung eines Bauteils nach einem der vorhergehenden Ansprüche 1-10 als Gehäuse, Abdeckung, Verschalung, Leitelement, insbesondere im Automobilbereich, Mobilfunkbereich, Elektronikbereich, Elektrikbereich, Eisenbahnbereich, Sportartikelbereich, Möbelbereich handelt, insbesondere vorzugsweise als Luftleitteil und/oder eine Luftführung im Automobilbereich.

## Claims

1. Component (1) with at least one plastic region (3, 21), which extends with its surface (32) facing a front side (28) along a reference plane (22),
**characterized in that**
in this plastic region (3, 21), the plastic wall (27) has a wall thickness (d) in the range of 0.7-1.1 mm,
a continuous two-dimensional grid (30) of channel-shaped depressions (6) is formed in this plastic region (3, 21), in which depressions (6) the plastic wall (27) is offset by an offset (v) from the reference plane (22) while the wall thickness (d) remains essentially constant,
the offset (v) perpendicular to the reference plane (22) from the reference plane (22) to the surface (32) of the rear side (29) of the recesses (6) is in the range of 1.5 to 3.5 times the wall thickness (d),
wherein the grid (30) forms a pattern with a plurality of grid cells (31) repeating in two directions of the reference plane (22).

2. Component (1) according to claim 1, **characterized in that** the grid cells (31) are selected from the group: triangles, preferably isosceles triangles; quadrilaterals, preferably squares, rectangles, rhombuses, rhombuses; pentagons, preferably equilateral pentagons; hexagons, preferably equilateral hexagons; octagons, preferably equilateral octagons; or a combination of these elements,
wherein preferably the grid cells (31) have an at least two-count rotational symmetry, preferably a 2, 3, 4, 5, 6 or 8-count rotational symmetry, in particular preferably a 6-count rotational symmetry,
and wherein preferably all grid cells (31) are substantially identical.

3. Component (1) according to one of the preceding claims, **characterized in that** the side length of the grid cell (31) is in the range of 2 - 40 mm, preferably in the range of 3 - 30 mm, in particular in the range of 7 - 15 mm, the grid cell (31) preferably being equilateral.

4. Component (1) according to one of the preceding claims, **characterized in that** the grid cell (31) is an equilateral hexagon, preferably with a hexagon key width (k) in the range of 15 - 25 mm, preferably with a plastic wall thickness (d) in the range of 0.5 - 1.1 mm, preferably in the range of 0.7 - 1 mm.

5. Component (1) according to one of the preceding claims, **characterized in that** the wall thickness (d) is in the range of 0.7 - 1 mm,
and/or that the wall thickness (d) is the same over the entire plastic area except for a deviation of less than 5%, preferably less than 2%, over the corrugation.

6. Component (1) according to one of the preceding claims, **characterized in that** the recesses (6) are rounded in relation to their concave configuration viewed from the front side (28), preferably with radii of curvature in the range of 2-10 mm, in particular preferably in the range of 3-7 mm
and/or that the recesses (6) are rounded in relation to the angled portions formed by corners of the grid cell (31), preferably with a radius in the range of 4-10 mm, in particular in the range of 5-7 mm.

7. Component (1) according to one of the preceding claims, **characterized in that** the elevation regions (5) formed between the depressions (6) are convexly curved when viewed from the front side (28), the center point (34) projecting most towards the front side (28) preferably being arranged in the region of the center of symmetry of the grid cell (31) or on the latter.

8. Component (1) according to one of the preceding claims, **characterized in that** at least the plastic region (2, 21) consists of a thermoplastic material selected from the following group: Polyolefin, polyamide, polycarbonate, polyester, polylactate, polyacrylate, polystyrene, polyvinyl, polyether, or a mixture or a copolymer of these systems, in particular preferably selected from the following group Acrylonitrile butadiene styrene (ABS), polyamide 6, polymethyl methacrylate (PMMA), polyethylene terephthalate (PET), polyethylene (PE), polypropylene (PP), polyether ether ketone (PEEK), polyvinyl chloride (PVC), or mixtures or copolymers of these systems, wherein the plastic area (2, 21) is preferably formed on the basis of polypropylene (PP),
wherein these plastics preferably contain fillers and/or reinforcing materials in a proportion of up to 60 percent by weight, preferably up to 40 percent by weight, based on the total molding compound, in particular preferably selected from the group of reinforcing fibers, in particular glass fibers, carbon fibers, particulate, in particular mineral fillers, in particular talc, chalk, glass beads, broken glass, calcium carbonate, and mixtures thereof,
and wherein further preferably these plastics contain additives and/or aggregates different from the said fillers and/or reinforcing materials in a proportion of up to 20 percent by weight, preferably up to 10 percent by weight, in particular preferably selected from the group of impact modifiers, organic or inorganic pigments, carbon black, demoulding aids, stabilizers, residues from the polymerization process such as in particular catalysts, or mixtures thereof.

9. Component (1) according to one of the preceding claims, **characterized in that** the component (1) has, in addition to the plastic region (2, 21), at least one further region (4) without topological structuring, this preferably being an edge region of the component (1), and this further region (4) preferably being made from a different plastic material, in particular preferably from a material which is elastomeric at room temperature, in particular preferably from a thermoplastic elastomer material (TPE), in particular preferably selected from the following group: olefin-based thermoplastic elastomers, in particular PP/EPDM, crosslinked olefin-based thermoplastic elastomers, in particular PP/EPDM, urethane-based thermoplastic elastomers, thermoplastic polyester elastomers, thermoplastic copolyesters, styrene block copolymers, in particular SBS, SEBS, SEPS, SEEPS and MBS, thermoplastic copolyamides
wherein preferably the further region (4) is molded directly onto the topologically structured plastic region (2, 21).

10. Component (1) according to claim 9, **characterized in that** the further region (4) consists of a TPE material and forms at least one edge region (4) of the component (1), the component (1) preferably additionally having fastening elements (2) by means of which the component (1) can be fastened to another workpiece, in particular preferably to a vehicle element.

11. Component (1) according to one of the preceding claims, **characterized in that** it is a part or as a whole a component selected from the following group: Housing, cover, casing, guide element, in particular in the automotive sector, mobile radio sector, electronics sector, electrical sector, railroad sector, sporting goods sector, furniture sector, wherein it is in particular preferably an air guide part and/or an air guide in the automotive sector.

12. Method for producing a component (1) according to one of the preceding claims, wherein in a 1st step a hard component (3) of the component is formed from a thermoplastic material in an injection molding process or extrusion process step, a hard component (3) of the component is formed from a thermoplastic material in an injection molding process or extrusion process, at least one region (2, 21) or the entire hard component (3) being topologically structured directly in this process step by corresponding shaping of the mold, in that a continuous two-dimensional grid (30) of channel-shaped depressions (6) is formed, in which recesses (6) the plastic wall (27) is offset from the reference plane (22) by an offset (v) while the wall thickness (d) remains substantially constant, the offset (v) perpendicular to the reference plane (22) from the reference plane (22) to the surface (32) of the rear side (29) in the recesses (6) is in the range of 1.5 to 3.5 times the wall thickness (d), and wherein the grid (30) forms a pattern with a plurality of grid cells (31) repeating in two directions of the reference plane (22), and wherein further regions, preferably of a different plastic material, in particular preferably of a thermoplastic elastomer material, are subsequently injection-molded on.

13. Method for designing an injection mould for producing a component according to one of the preceding claims 1-10 for use in a method according to claim 12, **characterized in that**, starting from base elements (9), the head regions (10) of which predetermine the grid elements (31), and which are designed as conical polygonal truncated cones with conical side faces (11) which are connected to one another via rounded curved edges (12), these base elements (9) are arranged corresponding to the grid (30), preferably with respect to a honeycomb geometry base element (20) which is similar to the grid element (31), and formed in the plane of transition from the head portion (10) to the side surfaces (11, 12), at a distance in the range of 3-10 mm, preferably in the range of 4-6 mm, and by connecting the base elements with a transition radius to form the geometry of the recesses (6), preferably with a radius in the range of 3-10 mm, preferably in the range of 4-6 mm, and in which the topologically structured boundary surface thus formed is duplicated to form the cavity of the mold and offset by the desired wall thickness perpendicular to the plane.

14. Use of a component according to one of the preceding claims 1-10 as a housing, cover, casing, guide element, in particular in the automotive sector, mobile radio sector, electronics sector, electrical sector, railroad sector, sporting goods sector, furniture sector, in particular preferably as an air guide part and/or an air duct in the automotive sector.

## Revendications

1. Composant (1) comprenant au moins une zone en matière plastique (3, 21) qui s'étend le long d'un plan de référence (22) avec sa surface (32) tournée vers une face avant (28),
**caractérisé en ce que**
dans cette zone en matière plastique (3, 21), la paroi de plastique (27) présente une épaisseur de paroi (d) dans la plage de 0,7 à 1,1 mm,
dans cette zone de matière plastique (3, 21) est formé un réseau bidimensionnel continu (30) de creux (6) en forme de gouttière, dans lesquels creux (6) la paroi de matière plastique (27) est décalée d'un décalage (v) par rapport au plan de référence (22) pour une épaisseur de paroi (d) sensiblement constante,
le décalage (v) perpendiculaire au plan de référence (22) depuis le plan de référence (22) jusqu'à la surface (32) de la face arrière (29) se situe, pour les creux (6), dans une plage de 1,5 à 3,5 fois l'épaisseur de paroi (d),
dans lequel la grille (30) forme un motif comprenant une pluralité de cellules de grille (31) se répétant dans deux directions du plan de référence (22).

2. Composant (1) selon la revendication 1, **caractérisé en ce que** les cellules de grille (31) sont choisies dans le groupe : triangles, de préférence triangles isocèles ; quadrilatères, de préférence carrés, rectangles, losanges, losanges ; pentagones, de préférence pentagones équilatéraux ; hexagones, de préférence hexagones équilatéraux ; octogones, de préférence octogones équilatéraux ; ou une combinaison de ces éléments,
de préférence les cellules de grille (31) présentant une symétrie de rotation à au moins deux nombres, de préférence une symétrie de rotation à 2, 3, 4, 5, 6 ou 8 nombres, en particulier de préférence une symétrie de rotation à 6 nombres,
et dans lequel, de préférence, toutes les cellules de grille (31) sont sensiblement identiques.

3. Composant (1) selon l'une des revendications précédentes, **caractérisé en ce que** la longueur de côté de la cellule de grille (31) se situe dans la plage de 2 à 40 mm, de préférence dans la plage de 3 à 30 mm, en particulier dans la plage de 7 à 15 mm, la cellule de grille (31) étant de préférence équilatérale.

4. Composant (1) selon l'une des revendications précédentes, **caractérisé en ce que** la cellule de grille (31) est un hexagone équilatéral, de préférence avec une largeur de clé d'hexagone (k) dans la plage de 15 à 25 mm, de préférence pour une épaisseur de paroi plastique (d) dans la plage de 0,5 à 1,1 mm, de préférence dans la plage de 0,7 à 1 mm.

5. Composant (1) selon l'une des revendications précédentes, **caractérisé en ce que** l'épaisseur de paroi (d) se situe dans la plage de 0,7 à 1 mm,
et/ou **en ce que** l'épaisseur de paroi (d) est égale à l'ondulation dans toute la zone de matière plastique, à l'exception d'un écart de moins de 5 %, de préférence de moins de 2 %.

6. Composant (1) selon l'une des revendications précédentes, **caractérisé en ce que** les creux (6) sont arrondis par rapport à leur configuration concave vue depuis la face avant (28), de préférence avec des rayons de courbure dans la plage de 2 à 10 mm, en particulier de préférence dans la plage de 3 à 7 mm.
et/ou **en ce que** les creux (6) sont réalisés arrondis par rapport aux coudes formés par les coins de la cellule de grille (31), de préférence avec un rayon dans la plage de 4-10 mm, en particulier dans la plage de 5-7 mm.

7. Composant (1) selon l'une des revendications précédentes, **caractérisé en ce que** les zones en relief (5) formées entre les creux (6) sont réalisées avec une courbure convexe lorsqu'on les observe depuis la face avant (28), le point central (34) qui fait le plus saillie vers la face avant (28) étant de préférence disposé dans la zone du centre de symétrie de la cellule de grille (31) ou sur celle-ci.

8. Composant (1) selon l'une des revendications précédentes, **caractérisé en ce qu'**au moins la zone plastique (2, 21) est constituée d'une matière thermoplastique choisie dans le groupe suivant : Polyoléfine, Polyamide, Polycarbonate, Polyester, Polylactate, Polyacrylate, Polystyrène, Polyvinyle, Polyéther, ou un mélange ou un copolymère de ces systèmes, en particulier choisi de préférence dans le groupe suivant Acrylonitrile-Butadiène-Styrène (ABS), Polyamide 6, Polyméthacrylate de méthyle (PMMA), polyéthylène téréphtalate (PET), polyéthylène (PE), polypropylène (PP), polyétheréthercétone (PEEK), polychlorure de vinyle (PVC), ou des mélanges ou des copolymères de ces systèmes, la zone plastique (2, 21) étant de préférence réalisée à base de polypropylène (PP),
ces matières plastiques contenant de préférence des charges et/ou des matières de renforcement dans une proportion allant jusqu'à 60 % en poids, de préférence jusqu'à 40 % en poids, par rapport à la masse totale du moule, en particulier choisies de préférence dans le groupe des fibres de renforcement, en particulier des fibres de verre, des fibres de carbone, des charges particulaires, en particulier minérales, en particulier du talc, de la craie, des billes de verre, du calcin, du carbonate de calcium, et des mélanges de celles-ci,
et où en outre, de préférence, ces matières plastiques contiennent des additifs et/ou des agrégats différents des charges et/ou des matières de renforcement mentionnées dans une proportion allant jusqu'à 20 % en poids, de préférence jusqu'à 10 % en poids, en particulier choisis de préférence dans le groupe des modificateurs d'impact, des pigments organiques ou inorganiques, du noir de carbone, des auxiliaires de démoulage, des stabilisateurs, des résidus du processus de polymérisation comme en particulier des catalyseurs, ou des mélanges de ceux-ci.

9. Composant (1) selon l'une des revendications précédentes, **caractérisé en ce que** le composant (1) présente, outre la zone plastique (2, 21), au moins une autre zone (4) sans structuration topologique, cette zone étant de préférence une zone de bordure du composant (1), et cette autre zone (4) étant plus préférentiellement fabriquée en un autre matériau plastique, notamment de préférence en un matériau élastomère
à température ambiante, notamment de préférence en un matériau élastomère thermoplastique (TPE), notamment de préférence choisi dans le groupe suivant : élastomères thermoplastiques à base d'oléfine, en particulier PP/EPDM, élastomères thermoplastiques réticulés à base d'oléfine, en particulier PP/EPDM, élastomères thermoplastiques à base d'uréthane, élastomères thermoplastiques de polyester, copolyesters thermoplastiques, copolymères blocs de styrène, en particulier SBS, SEBS, SEPS, SEEPS et MBS, copolyamides thermoplastiques l'autre zone (4) étant de préférence directement injectée sur la zone en plastique (2, 21) à structure topologique.

10. Composant (1) selon la revendication 9, **caractérisé en ce que** l'autre zone (4) est constituée d'un matériau TPE, et forme au moins une zone de bord (4) du composant (1), le composant (1) présentant de préférence en outre des éléments de fixation (2) au moyen desquels le composant (1) peut être fixé à une autre pièce, en particulier de préférence à un élément de véhicule.

11. Composant (1) selon l'une des revendications précédentes, **caractérisé en ce qu'**il s'agit d' une partie ou de l 'ensemble d'un composant choisi dans le groupe suivant : Boîtier, couvercle, coffrage, élément de guidage, notamment dans le domaine de l'automobile, de la téléphonie mobile, de l'électronique, de l'électricité, du ferroviaire, des articles de sport, de l'ameublement, étant entendu qu'il s'agit notamment et de préférence d'un élément de guidage d'air et/ou d'une conduite d'air dans le domaine de l'automobile.

12. Procédé de fabrication d'un composant (1) selon l'une des revendications précédentes, dans lequel, dans une 1ère étape, un matériau thermoplastique est fabriqué, étape, un composant dur (3) de la pièce est formé à partir d'un matériau thermoplastique dans un procédé de moulage par injection ou un procédé d'extrusion, au moins une zone (2, 21) ou l'ensemble du composant dur (3) étant structuré topologiquement directement dans cette étape du procédé par un façonnage correspondant du moule, en formant un réseau bidimensionnel continu (30) de creux (6) en forme de gouttière, dans lesquels creux (6) la paroi en matière plastique (27) est décalée d'un décalage (v) par rapport au plan de référence (22) pour une épaisseur de paroi (d) essentiellement constante, le décalage (v) perpendiculairement au plan de référence (22) du plan de référence (22) à la surface (32) de la face arrière (29) pour les creux (6) est de l'ordre de 1.5 à 3,5 fois l'épaisseur de paroi (d), et dans lequel la grille (30) forme un motif avec une pluralité de cellules de grille (31) se répétant dans deux directions du plan de référence (22), et dans lequel en outre, de préférence, d'autres zones, de préférence en un autre matériau plastique, en particulier de préférence en un matériau élastomère thermoplastique, sont ensuite injectées.

13. Procédé de conception d'un moule d'injection pour la fabrication d'un composant selon l'une des revendications précédentes 1-10, destiné à être utilisé dans un procédé selon la revendication 12, **caractérisé en ce que**, à partir d'éléments de base (9) dont les zones de tête (10) définissent les éléments de grille (31), et qui sont réalisés sous forme de troncs de cône polygonaux avec des faces latérales coniques (11) reliées entre elles par des arêtes de courbure arrondies (12), ces éléments de base (9) sont disposés en correspondance avec la grille (30), de préférence par rapport à un élément de base à géométrie en nid d'abeilles (20) similaire à l'élément de grille (31), et est formé dans le plan de la transition de la zone de tête (10) aux surfaces latérales (11, 12), à une distance de l'ordre de 3-10 mm, de préférence de l'ordre de 4-6 mm, et en reliant les éléments de base avec un rayon de transition pour former la géométrie des creux (6), de préférence avec un rayon dans la plage de 3-10 mm, de préférence dans la plage de 4-6 mm, et dans lequel la surface de délimitation topologiquement structurée ainsi formée est dupliquée pour former la cavité du moule et est décalée de l'épaisseur de paroi souhaitée perpendiculairement au plan.

14. Utilisation d'un composant selon l'une des revendications précédentes 1-10 comme boîtier, couvercle, coffrage, élément de guidage, en particulier dans le domaine de l'automobile, de la téléphonie mobile, de l'électronique, de l'électricité, du ferroviaire, des articles de sport, de l'ameublement, en particulier de préférence comme élément de guidage d'air et/ou un guide d'air dans le domaine de l'automobile.
